# EUROPEAN PATENT SPECIFICATION

(11) **EP 2 949 885 B1**
(45) Date of publication and mention of the grant of the patent: **13.09.2017**
(21) Application number: 15166191.5
(22) Date of filing: 04.05.2015
(51) Int. Cl.: F01D 25/28

(54) **METHOD AND DEVICE FOR MOUNTING AND REMOVING OF A TURBINE COMPONENT**
VERFAHREN UND VORRICHTUNG ZUR MONTAGE UND DEMONTAGE EINER TURBINENKOMPONENTE
PROCÉDÉ ET DISPOSITIF POUR LE MONTAGE ET LE DÉMONTAGE D'UN COMPOSANT DE TURBINE

(30) Priority: 26.05.2014 EP 14169844
(43) Date of publication of application: 02.12.2015
(73) Proprietor: Ansaldo Energia Switzerland AG, 5401 Baden (CH)
(72) Inventor: Aratori, Davide, 5415 Nussbaumen (CH); Golubic, Damir, 47000 Karlovac (HR); Seng, Daniel, 5453 Busslingen (CH); Rauch, Marc, 4402 Frenkendorf (CH)
(74) Representative: Bernotti, Andrea

(56) References cited:
- EP-A1- 1 878 662
- EP-A1- 2 070 663
- EP-A2- 2 543 868
- GB-A- 2 306 155
- JP-A- H10 231 737
- US-A- 5 456 560
- US-A- 5 911 680
- US-A1- 2012 159 955
- US-A1- 2014 123 656

## Description

### Technical field

The present invention relates to a mounting system for large parts or components of a turbine. It is applied for removing or mounting turbine components to inspect, repair or replace them. Further, it relates to a method for removing or mounting turbine components.

### Background of the disclosure

Turbine part or components need to be removed for inspection, maintenance and repairs or replacement of the parts or components. Such components can for example be burners of a gas turbine for thermal power generation. Burners are typically arranged radially at equal intervals at the middle part of the main body of the gas turbine and are inserted and assembled via flanges thereto. Conventionally, such parts are replaced manually by constructing simple scaffolds after removing pipes and other obstacles around the part and by manipulating an overhead traveling crane to sling the part by workers who get on the scaffolds.

Parts or components such as burners can be far too heavy to be handled by workers without the use of cranes or other lifting tools. Such a removal and handling is time consuming and it is difficult to maintain an adequate position of the burner during the works in the narrow inner space of the turbine and on the unstable outside scaffolds.

In order to make this work easier, US patent 5,921,075 discloses a burner replacement system in which a rail is attached at a circumferential flange connection of two axially adjacent parts of the gas turbine housing, wherein a carriage of complex design can be moved along this rail in order to transport the burner to be installed. The carriage is equipped with an articulation and with a burner carrier which can be displaced in translation such that it can transport individual burners of the gas turbine to their intended location. A disadvantage of the known device is, however, that it is very large and requires a comparatively large maneuvering space around the turbine housing. However, this maneuvering space is not always available. A further disadvantage of the known device is that, on account of the comparatively long and free-ending rod assembly on the carriage, and the considerable weights of the components to be replaced, such as burners and transition pipes, these can only be positioned with insufficient precision with respect to the component opening through which they are to be introduced into the turbine.

Devices for mounting/removing a mechanical component in/from a system are disclosed in JPH10231737, EP2543868, EP1878662, US2012/159955, US5911680, US2014/123656, GB2306155, US5456560, EP2070663.

### Summary of the invention

The object of the present invention is to provide a mounting system for installing and removing a component on or in a turbine according to claim 1, which mounting system, on one hand, is compact and, on the other hand, allows exact-fit positioning of the relevant component on or in the turbine. It is a further object of the invention to provide a method for mounting and removing a part or component of a turbine according to claims 9 and 10, which method can be carried out quickly without a particularly large installation space requirement. According to the present invention, the rail structure is attachable to a turbine or turbine housing. The mounting system is a system for mounting a turbine component to a turbine. In particular it can be a system for mounting a combustor component such as a burner or liner to, respectively into a combustor casing.

The lifter can be any commercially available lifting equipment such as a fork lift with a sufficient loading capacity. The support frame can be form fit to the lifter, e.g. to the fork of a fork lifter. The support frame can further be formed to receive the turbine component in a form fit connection. A lifter can also be a movable service platform, guided mobile lifting table or another lifting carriage.

The lifter is a lifter for vertical lifting, for example from the floor of the power plant.

The mounting system comprises a guide rail for guiding the lifter along a predefined path to the correct position for lifting or receiving the turbine part. The rails can be fixed to the ground.

Instead of rails marks indicating the correct position of the lifter on the ground can also be used. A positioning device such as a master plate can be used to place the rails in the correct position relative to a fix point of the turbine such as the bearing or king pin. Also an optical guidance or any other precise position system can be used. Precise positioning in this context means a positioning within a few centimeters tolerance, preferably with a tolerance of less than 1 cm, more preferably within less than half a centimeter.

The holder comprises a metal belt which is form fit to a first section of the turbine component. The metal belt can be buckled on the turbine component for holding or lifting the turbine component.

According to an embodiment of the present invention, the holder comprises a bracket which is configured for connection to a second section of the turbine component. The turbine component can be attached to the traveller with the help of a metal belt or of a bracket or a combination of both. The traveller can comprise a trolley and/or a linear guide connected to the beam.

For pushing and pulling the traveller along the rail structure the mounting system can comprise a jacking screw system. According to a further embodiment the jacking screw system is a self-breaking system. The one end of the rail structure is mounted to a bracket with a joint, and connected to at least one further bracket via tie rods or chains spanning from the brackets to the rail structure for a hinged suspension.

The joint connecting the end of the rail structure to the bracket allows an adjustment of the tilt angle of the rail structure by adjusting the length of the tie rod, the chain or the rod chain combination.

The tilt angle can for example be the angle relative to the horizontal plane, relative to the axis of the turbine, or the axis of a turbine component. For an adjustment the reference can typically be freely chosen, as long as it is a fixed reference plane. Two tie rods span from the bracket to the rail structure and hold the beam in a defined angle relative to the turbine. The tilt angle of the beam can be adjusted by adjusting the length of the tie rods. The use of multiple tie rods allows the design of a lighter rail system as the rod is supported at many points and bending moments acting on the rail system can be reduced.

According to another embodiment the mounting system comprises a traveller with a first section for movable connection to the rail structure, a second section for connection to the holder, and an interface connecting the first section to the second section. The interface is configured for adjusting the position of the second section relative to the first section for aligning the position of the turbine component suspended by the mounting system relative to the turbine.

For alignment the adjustable interface can for example comprise two screws: One for horizontal and one for vertical displacements of the first section relative to the second section. The fine tuning can for example be done in a plane normal to the axial extension of the beam of the rail structure.

The mounting system can further comprise a tool frame which is attachable to the lifter and which is configured for receiving the rail structure with the traveller. With the help of the tool frame the rail structure together with the traveller can be mounted/dismounted to a turbine. For mounting/dismounting the frame tool has to be attached to the lifter. The rail structure with traveller has to be attached to the frame tool for mounting and the lifter can be driven to a defined position below or next to the turbine. The lifter then lifts the rail structure with traveller up to the turbine for mounting to the turbine. Once the rail structure with traveller is mounted on the turbine the lifter with tool frame can be removed and the tool frame can be replaced by the support frame.

Dismounting of the rail structure with traveller can be done analogously with a reverse order of the steps.

For correct placement of the lifter rails or any other precise position system can be used to guide the lifter.

According to a further embodiment the mounting system comprises at least one of a manual handle, an electro motor, and a pneumatic motor for moving the traveller relative to the rail structure. A controlled movement of the traveller is important to assure a safe handling of the turbine component which is removed or mounted with the mounting system.

Besides the mounting system a method for mounting, respectively a method for removing a turbine component from a turbine is an object of the invention. The method for mounting, respectively removing a turbine component from a turbine comprises the step of providing a mounting system for a turbine component. Such a mounting system has a suspended rail structure for moving the turbine component with a traveller which can move along a rail of the rail structure and can be connected to a holder for attaching the turbine component to the traveller. It further comprises a lifter with a support frame which is attachable to the lifter and configured for receiving the turbine component with the holder from the traveller. The mounting system further comprises a fixing bracket for suspension of the rail structure from the turbine.

According to the method the rail structure with the traveller is mounted to the turbine via tie rods or chains and pivotably connected to the turbine.

For connection to the turbine brackets are used. After mounting the rail structure it can be aligned with the turbine component, respectively the turbine into which the component is to be introduced, by adjusting the length of the tie rod or chain which are used to connect the rail structure to the turbine.

For removing a turbine component the axial extension of the rail structure can for example be aligned to the axis of the installed turbine component which is to be removed.

For mounting a turbine component axial extension of the rail structure can for example be aligned to the axis of the opening in the turbine into which the turbine component is to be mounted.

According to the method for removing a turbine component the turbine component can now be attached to the traveller which is moved along the rail to a dismounting position above the turbine component with the help of a holder. Once attached to the traveller the turbine component can be pulled out of the turbine by moving the traveller along the rail structure. In a next step the lifter with the support frame attached to it can be moved to a defined position below the turbine component, and the support frame can be lifted by the lifter to receive the turbine component. Once the support frame is in place, holding the turbine component, the turbine component, respectively the holder, can be, detached from the traveller and the turbine component can be removed with the lifter which is holding the support frame and turbine component.

The method for mounting a turbine component includes the steps of providing a mounting system and aligning the mounting system with the turbine as described above.

In addition such a method for mounting a turbine component comprises the steps of moving the turbine component with the lifter which is holding the support frame and turbine component to a defined position below the rail structure, lifting the support frame with the turbine component up to the traveller and connecting the holder with the turbine component to the traveller. Once the turbine component is connected to the traveller the support frame can be lowered with the lifter and the turbine component can be pushed to the turbine by moving the traveller along the rail structure to a mounting position (typically this position is identical to the dismounting position). In the mounting position the turbine component can be attached to the turbine for example with the help of bolts fixing the part to a flange of the turbine casing.

According to an embodiment of the method for removing a turbine component from a turbine, respectively of the method for mounting of a turbine component the methods comprise the steps of attaching tool frame to the lifter, and attaching the rail structure with the traveller to the tool frame. Once the rail structure is attached, the lifter can be moved to a defined position next to or below the turbine and the lifter can lift the rail structure with the traveller for mounting to the turbine.

Once lifted to the correct position the rail structure with the traveller is mounted to the turbine with tie rods or chains. For connection to the turbine brackets are used.

### Brief description of the drawings

The disclosure, its nature as well as its advantages, shall be described in more detail below with the aid of the accompanying schematic drawings. Referring to the drawings:
Fig. 1 shows a cut out of a turbine with a turbine component in the installed position and the turbine component indicated in a pulled position,
Fig. 2 shows a perspective view of a mounting system according to an embodiment of the present invention;
Fig. 3 shows an embodiment with a side wall mounted rail structure;
Fig. 4 shows an embodiment with a top mounted rail structure;
Fig. 5 shows an embodiment of the rail structure with traveller and holder;
Fig. 6 shows an embodiment of a lifter with a tool frame and rail structure;
Fig. 7 shows an embodiment of a traveller and holder for a turbine component;
Fig. 8, 8a, 8b, 8c shows details of a traveller with a first and a second section whose position can be adjusted relative to one another.

### Embodiments of the disclosure

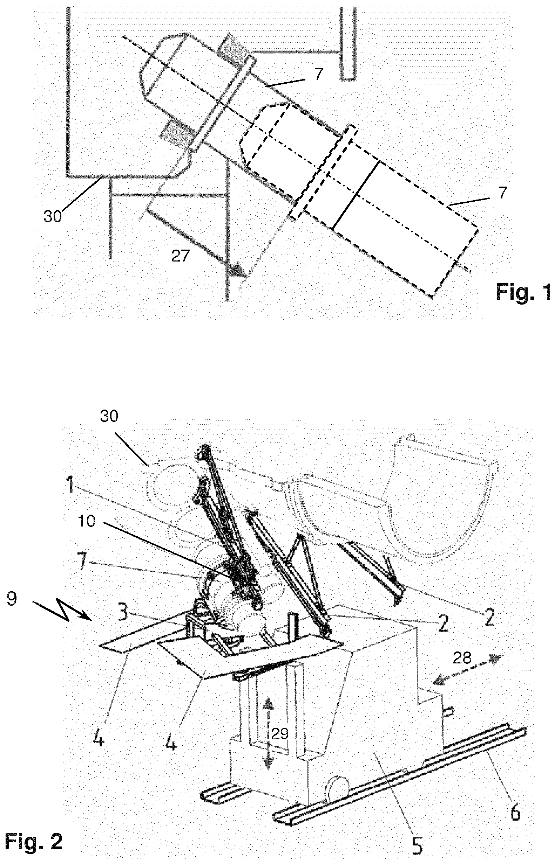

A typical mounting position for a turbine component 7 in turbine 30 is shown in Fig. 1. The turbine component 7 of this example is a combustor which is installed in a turbine 30. For service or replacement the combustor has to be pulled out of the by a displacement 27 thereby bringing the turbine component 7 in the position indicated by the dotted lines. Once the turbine component 7 is pulled to an outside position it can be removed from the turbine without interfering with the turbine casing or other parts which could hinder its movement.

In particular on the lower half of the turbine 30 which is not directly accessible by overhead cranes the removal of heavy turbine components 7 from the turbine 30 is difficult. The mounting system 9 comprises a rail structure 1 which can be attached to a turbine 30. In the embodiment of Fig. 2 the rail structure comprises a monorail 2 to which the turbine component 7 (in this example a combustor) can be movably attached with the help of a traveller 10. The turbine component 7 can be removed (pulled) from the turbine 30 or mounted to the turbine 30 along the linear extension of the rail structure 1.

After moving the turbine component 7 out of the turbine along the rail structure 1 the turbine component 7 can be received by a lifter 5 with the help of a support frame 3. For receiving the turbine component 7 the support frame 3 has a from-fit interface. To receive the turbine component 7 the lifter 5 is brought to a defined position below the rail structure 1. For better positioning of the lifter 5 guide rails 6 can be used. The lifter 5 can only move along with horizontal displacement 28 which is controlled by the guide rails 6. The end point of the horizontal displacement can be defined by a stopper (not shown). Once the lifter 5 is moved to the right position on the ground the support frame 3 can be lifted up with a vertical displacement 29 to the turbine component 7 to receive the turbine component 7 with its form fit shape. Dedicated platforms and scaffolding can be erected around the support frame 3 in order to support and protect workers during assembly and disassembly of the turbine component 7. For better accessibility and safety a work platform 4 can also be attached to the lifter 5. If needed such a platform 4 facilitates manual securing of the turbine component 7 to the support frame 3 and manual releasing of the turbine component 7 from the traveller 10. For safety reasons a platform 4 typically has a railing (not shown).

Several rail structures 1 can be attached to the turbine 30 and remain attached such that no time is needed for attaching and removing them during an outage of the turbine.

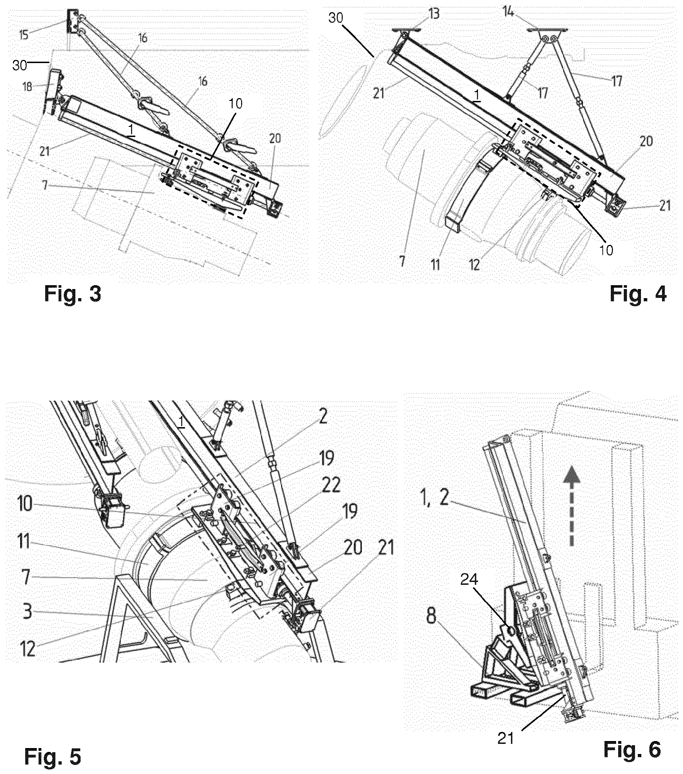

Fig. 3 shows an embodiment of a side wall mounted rail structure 1 in more detail. The rail structure is attached to a side wall of the turbine 30 via brackets 15, 18. A beam 20 supporting the rail structure 1 is attached to a first bracket 18 via a pivotable joint. Two chains 16 span from a second bracket 15 attached to the wall of the turbine 30 above the first bracket 18 to the rail structure and hold the beam 20 in a defined angle relative to the turbine 30. The tilt angle of the beam 20 can be adjusted by adjusting the length of the chain 16, e.g. with the help of a chain block. The angle of the beam 20 relative to a horizontal plane is typically equal to the direction of the main axis of the turbine component 7, respectively axis of the opening in the turbine 30 for receiving the turbine component 7. When aligned to the axis of the opening the turbine component 7 can easily be mounted or dismounted by the traveller 10 which can move along the rail structure 1 with the tilt angle of the beam 20. The traveller 10 can be moved along the rail structure 1 with the help of a jack screw system 21.

Fig. 4 shows an embodiment with an overhead mounted rail structure 1. The rail structure is attached to an overhead wall of the turbine 30 via brackets 13, 14. A beam 20 supporting the rail structure is attached to a first bracket 13 via a privotable joint. Two tie rods 17 span from a second bracket 14 attached to the wall of the turbine 30 to the rail structure and hold the beam 20 in a defined angle relative to the turbine 30. The tilt angle of the beam 20 can be adjusted by adjusting the length of the tie rods 17. The angle of the beam 20 relative to a horizontal plane is typically equal to the direction of the main axis of the turbine component 7, respectively axis of the opening in the turbine 30 for receiving the turbine component 7. The traveller 10 can be moved along the rail structure 1 with the help of a jack screw system 21.

Fig. 5 shows an embodiment of the rail structure 1 with a traveller 10 and holder for attaching the turbine component 7 to the traveller 10. The holder comprises a form fit belt 11 which can be buckled on the turbine component 7 and a bracket 12 for mounting the turbine part to the traveller, e.g. with bolts. The traveller 10 comprises two trolleys 19 which are fastened to the beam 20 which is configured as a monorail 2. The traveller can be pushed and pulled along the rail 2 with the help of the jack screw system 21. Thus the traveller can move from a mounting/dismounting position where the turbine component 7 can be fixed, respectively released form the turbine to a position for loading, respectively unloading onto the lifter 5. The jack screw system 21 allows fine tuning of the traveller 10 position in the direction of the rail 2.

For removal of the turbine component 7 a horizontal adjustment screw 22 allows adjustment of the turbine component's 7 position in a direction normal to the longitudinal extension of the rail 2 for exact placement of the turbine component 7 on the support frame 3 which is lifted to receive the turbine component 7 by the lifter 5 (not shown in this Fig.).

For mounting of the turbine component 7 the horizontal adjustment screw 22 allows adjustment of the holder's 11, 12 position in a direction normal to the longitudinal extension of the rail 2 for exact placement of the holder 11, 12 attached to the traveller 10 after the turbine component 7 has been lifted on the support frame 3 by the lifter 5 (not shown in this Fig.) towards the traveller 10 such that the holder can be attached to the traveller 10.

Fig. 6 shows an embodiment of a lifter 5 with a tool frame 8 holding a rail structure 1. For mounting the rail structure 1 to the turbine 30 the lifter 5 can be moved to a defined position on the ground. The lifter 5 can lift the tool frame 8 holding the rail structure 1 up to a position where the rail structure 1 can be connected to the turbine 30 (not shown). The rail structure 1 can be brought in the correct angle relative to the horizontal plane by pivoting it around a horizontal axis with the help of a worm-gearbox 24. Fine tuning of the position of the rail structure 1 relative to the turbine 30 can be done by moving the rail structure with the help of the jack screw system 21.

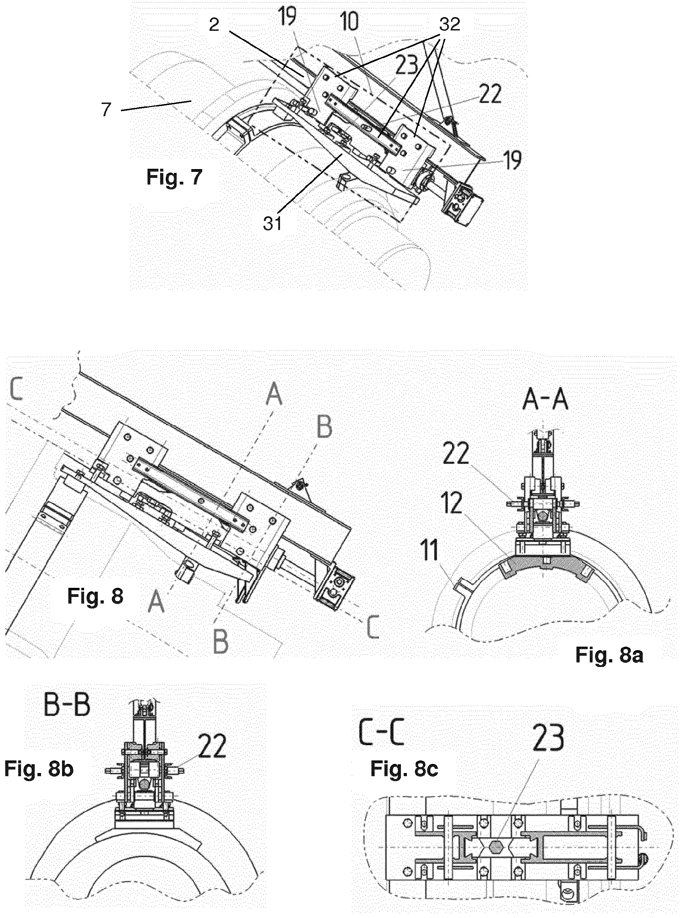

Fig. 7 shows an embodiment of a traveller 10 in more detail. The traveller 10 comprises a first section 31 which is directly attached to the rail 2 via two trolleys 19. The position of the first section 31 can only be changed along rail 2. For adjustment of the travellers position in a plane normal to the longitudinal extension of the rail 2 the traveller comprises a second section 32 which is attached to the first section via a horizontal adjustment screw 22 and a vertical adjustment screw 23. Adjustment of normal to the longitudinal extension of the rail 2 can be advantageous for attaching the turbine component 7 to the traveller 10, for mounting the turbine component 7 to the turbine 30 or for placing it on the support frame 3, or also for placing the rails structure on the tool frame 8.

Fig. 8, 8a, 8b, 8c shows details of a traveller 10 with cross sections A-A, B-B and C-C indicated in Fig. 8. Fig. 8a shows Cross section A-A with the horizontal adjustment screw 22 and the holder comprising of a belt 11 and a bracket 12. Fig. 8b shows Cross section B-B with the horizontal adjustment screw 22 and Fig. 8c shows the vertical adjustment screw 23 in Cross section C-C.

It will be appreciated by those skilled in the art that the present invention can be embodied in other specific forms without departing from the essential characteristics thereof. The disclosed mounting system and method can for example be used for mounting a combustor or burner of a gas turbine into the casing of a gas turbine and for removal of a combustor or burner of a gas turbine from the casing of a gas turbine.

### List of designations

- 1: rail structure
- 2: monorail, double rail
- 3: support frame
- 4: platform
- 5: lifter (fork lift)
- 6: guide rail
- 7: turbine component (burner)
- 8: tool frame
- 9: mounting system
- 10: traveller
- 11: belt
- 12: bracket (beam support)
- 13: bracket
- 14: bracket
- 15: bracket
- 16: chain
- 17: tie rod
- 18: bracket (beam support)
- 19: trolley
- 20: beam
- 21: jack screw system
- 22: horizontal adjustment screw
- 23: vertical adjustment screw
- 24: worm-gearbox
- 25: bearing block
- 26: recess
- 27: displacement
- 28: horizontal displacement
- 29: vertical displacement
- 30: turbine
- 31: first section
- 32: second section

## Claims

1. A mounting system (9) for mounting or removing a turbine component (7) having an axis to or from a turbine (30), the mounting system (9) comprising:
- a suspended rail structure (1) configured to move the turbine component (7) with the help of a traveller (10) in a direction along the axis of the turbine component between an outside and an inside position with respect to the turbine (30);
- a lifter (5) configured to receive the turbine component (7) in the outside position with the help of a support frame (3); and
- a guide rail (6) for guiding the lifter (5) along a predefined path on the ground;
the suspended rail structure (1) comprises:
- a first bracket (13, 18) attached to a wall of the turbine (30),
- a beam (20) configured as a longitudinally extending rail (2) to support the rail structure (1), the beam (20) having one end connected to the first brackets (13, 18) via a pivotable joint for a hinged suspension,
- a second bracket (14, 15) attached to a wall of the turbine (30), and
- two tie rods (17) or two chains (16) connected at one end to the second bracket (14, 15) and at the other end to the beam (20) at positions longitudinally displaced to each other for suspending and holding the beam (20) in a defined tilt angle relative to the turbine (30); wherein
- the traveller (10) is movable along the rail (2) and connected to a holder (11, 12) for attaching the turbine component (7) to the traveller (10);
- the support frame (3) is configured to receive the turbine component (7) with the holder (11, 12) in the outside position and to be attached to the lifter (5) for being movable in a vertical direction (29);
the tilt angle of the beam (20) is adjustable by adjusting the length of the tie rods (17) or chains (16) for aligning the rail structure (1) with the moving direction along the axis of the turbine component (7); and wherein the holder (11, 12) comprises a belt (11) which is form fit to a first section of the turbine component (7).

2. Mounting system (9) according to claim 1, **characterized in that** the holder comprises a bracket (12) which is configured for connection to a second section of the turbine component (7).

3. Mounting system (9) according to one of the claims 1 to 2, **characterized in that** the traveller (10) comprises a trolley (19) and/or a linear guide connected to the rail (2).

4. Mounting system (9) according to one of the claims 1 to 3, **characterized in that** it comprises a jacking screw system (21) for pushing and pulling the traveller (10) along the rail (2).

5. Mounting system (9) according to claim 4, **characterized in that** jacking screw system (21) is a self-breaking system.

6. Mounting system (9) according to claim 1 , **characterized in that** the traveller (10) comprises a first section for movable connection to the rail structure (1),a second section for connection to the holder (11, 12), an interface connecting the first section to the second section, wherein the interface is configured for adjusting the position of the second section relative to the first section for aligning the position of the turbine component (7) suspended by the mounting system relative to the turbine.

7. Mounting system (9) according to one of the claims 1 to 6, **characterized in that** it comprises a tool frame (8) attachable to the lifter (5) and configured for receiving the rail structure (1) with the traveller 10) for mounting/dismounting the rail structure (1) with the traveller (10) to a turbine.

8. Mounting system (9) according to one of the claims 1 to 7, **characterized in that** it comprises at least one of a manual handle, an electro motor, and a pneumatic motor for moving the traveller (10) relative to the rail structure (1).

9. Method for removing a turbine component (7) from a turbine (30), the method comprising the steps of
- providing a mounting system (9) as claimed in one of the claims 1 to 8,
- mounting the rail structure (1) with the traveller (10) to the turbine (30) via the brackets (13, 14, 15, 18),
- aligning the rail structure (1) with the axis of the turbine component by adjusting the length of the tie rods (17) or chains (16),
- attaching the turbine component (7) to the traveller (10) with the help of the holder (11, 12),
- pulling the turbine component (7) out of the turbine (30) by moving the traveller (10) along the rail structure (1),
- moving the lifter (5) with the support frame (3) attached to it to a defined position vertically below the turbine component (7),
- lifting the support frame (3) up to receive the turbine component (7) in the outside position,
- detaching the turbine component (7) from the holder (11, 12),
- and removing the turbine component (7) with the lifter (5) which is holding the support frame (3) and turbine component (7).

10. Method for mounting a turbine component (7) to a turbine (30), the method comprising the steps of
- providing a mounting system (9) as claimed in one of the claims 1 to 8,
- mounting the rail structure (1) with the traveller (10) to the turbine (30) via the brackets (13, 14, 15, 18),
- aligning the rail structure (1) with the moving direction of the turbine
component (7) between the outside and the inside position by adjusting the length of the tie rods (17) or chains (16),
- moving the turbine component (7) with the lifter (5) which is holding the support frame (3) and turbine component (7) to a defined position vertically below the rail structure (1),
- lifting the support frame (3) with the turbine component (7) up to the traveller (10),
- connecting the holder (11, 12) with the turbine component (7) in the outside position to the traveller (10),
- lowering the support frame (3) with the lifter (5),
- pushing the turbine component (7) into the turbine (30) by moving the traveller (10) along the rail structure (1),
- detaching the turbine component (7) from the holder (11, 12).

11. Method for removing a turbine component (7) from a turbine (30) according to claim 9 or method for mounting a turbine component (7) to a turbine (30) according to claim 10, **characterized in that** the step of mounting the rail structure (1) with the traveller (10) to the turbine (30) comprises the steps of attaching a tool frame (8) to the lifter (5), and attaching the rail structure (1) with the traveller (10) to the tool frame (8), moving the lifter to a defined position next to or below the turbine (30) and lifting the rail structure (1) with the traveller (10) for mounting the rail structure (1) to the turbine.

## Patentansprüche

1. Montagesystem (9) für die Montage oder das Entfernen einer Turbinenkomponente (7) mit einer Achse an oder von einer Turbine (30), welches Montagesystem (9) enthält:
- einen Hängeschienenaufbau (1), der so konfiguriert ist, dass er die Turbinenkomponente (7) mithilfe einer Laufkatze (10) in einer Richtung entlang der Achse der Turbinenkomponente zwischen einer äußeren und einer inneren Position in Bezug auf die Turbine (30) bewegt;
- eine Hubeinrichtung (5), die dafür konfiguriert ist, die Turbinenkomponente (7) in der äußeren Position mithilfe eines Tragrahmens (3) aufzunehmen; und
- eine Führungsschiene (6) zum Führen der Hubeinrichtung (5) entlang einem vorbestimmten Weg auf dem Boden;
wobei der Hängeschienenaufbau (1) enthält:
- einen ersten Bügel (13, 18) der an einer Wand der Turbine (30) befestigt ist,
- einen Träger (20), der als eine in Längsrichtung verlaufende Schiene (2) konfiguriert ist, um den Schienenaufbau (1) zu tragen, wobei der Träger (20) an einem Ende mit den ersten Bügeln (13, 18) über ein Drehgelenk zur gelenkigen Aufhängung verbunden ist,
- einen zweiten Bügel (14, 15) der an einer Wand der Turbine (30) befestigt ist, und
- zwei Zugstangen (17) oder zwei Ketten (16), die an einem Ende mit dem zweiten Bügel (14, 15) und an dem anderen Ende mit dem Träger (20) an in Längsrichtung gegeneinander versetzten Positionen verbunden sind, um den Träger (20) in einem definierten Kippwinkel in Bezug auf die Turbine (30) aufzuhängen und zu halten; wobei
- die Laufkatze (10) entlang der Schiene (2) beweglich ist und mit einem Halter (11, 12) zum Befestigen der Turbinenkomponente (7) an der Laufkatze (10) verbunden ist;
- der Tragrahmen (3) dafür konfiguriert ist, die Turbinenkomponente (7) mit dem Halter (11, 12) in der äußeren Position aufzunehmen und an der Hubeinrichtung (5) angebracht zu werden, sodass er in einer senkrechten Richtung (29) beweglich ist,
- der Kippwinkel des Trägers (20) verstellbar ist durch Verstellen der Länge der Zugstangen (17) oder Ketten (16) zum Ausrichten des Hängeschienenaufbaus (1) mit der Bewegungsrichtung entlang der Achse der Turbinenkomponente (7) und; wobei
- der Halter (11, 12) einen Riemen (11) aufweist, welcher formschlüssig zu einem ersten Abschnitt der Turbinenkomponente (7) ist.

2. Montagesystem (9) nach Anspruch 1, **dadurch gekennzeichnet, dass** der Halter einen Bügel (12) aufweist, der zur Verbindung mit einem zweiten Abschnitt der Turbinenkomponente (7) konfiguriert ist.

3. Montagesystem (9) nach einem der Ansprüche 1 bis 2, **dadurch gekennzeichnet, dass** die Laufkatze (10) einen Wagen (19) und/oder eine mit der Schiene (2) verbundene lineare Führung aufweist.

4. Montagesystem (9) nach einem der Ansprüche 1 bis 3, **dadurch gekennzeichnet, dass** es ein Gewindestangensystem (21) zum Schieben und Ziehen der Laufkatze (10) entlang der Schiene (2) aufweist.

5. Montagesystem (9) nach Anspruch 4, **dadurch gekennzeichnet, dass** das Gewindestangensystem (21) ein selbstbrechendes System ist.

6. Montagesystem (9) nach Anspruch 1, **dadurch gekennzeichnet, dass** die Laufkatze (10) einen ersten Abschnitt zur beweglichen Verbindung mit dem Schienenaufbau (1), einen zweiten Abschnitt zur Verbindung mit dem Halter (11, 12) und eine Schnittstelle, die den ersten Abschnitt mit dem zweiten Abschnitt verbindet, aufweist, wobei die Schnittstelle dafür konfiguriert ist, die Position des zweiten Abschnitts relativ zu dem ersten Abschnitt einzustellen, um die Position der an dem Montagesystem aufgehängten Turbinenkomponente (7) relativ zu der Turbine auszurichten.

7. Montagesystem (9) nach einem der Ansprüche 1 bis 6, **dadurch gekennzeichnet, dass** es einen Werkzeugrahmen (8) aufweist, der an der Hubeinrichtung (5) anbringbar ist und dafür konfiguriert ist, den Schienenaufbau (1) mit der Laufkatze (10) zum Montieren/Demontieren des Schienenaufbaus (1) mit der Laufkatze (10) an einer Turbine aufzunehmen.

8. Montagesystem (9) nach einem der Ansprüche 1 bis 7, **dadurch gekennzeichnet, dass** es mindestens entweder einen Handgriff, einen Elektromotor oder einen Druckluftmotor zum Bewegen der Laufkatze (10) relativ zu dem Schienenaufbau (1) aufweist.

9. Verfahren zum Entfernen einer Turbinenkomponente (7) aus einer Turbine (30), welches Verfahren die Schritte enthält:
- Bereitstellen eines Montagesystems (9) nach einem der Ansprüche 1 bis 8,
- Anbringen des Schienenaufbaus (1) mit der Laufkatze (10) an der Turbine (30) mittels der Bügel (13, 14, 15, 18),
- Ausrichten des Schienenaufbaus (1) mit der Achse der Turbinenkomponente durch Einstellen der Länge der Zugstangen (17) oder Ketten (16),
- Befestigen der Turbinenkomponente (7) an der Laufkatze (10) mithilfe des Halters (11, 12),
- Herausziehen der Turbinenkomponente (7) aus der Turbine (30) durch Bewegen der Laufkatze (10) entlang des Schienenaufbaus (1),
- Bewegen der Hubeinrichtung (5) mit dem daran angebrachten Tragrahmen (3) zu einer definierten Position senkrecht unterhalb des Turbinenbauteils (7),
- Anheben des Tragrahmens (3), um die Turbinenkomponente (7) in der äußeren Position aufzunehmen,
- Lösen der Turbinenkomponente (7) von dem Halter (11, 12),
- und Entfernen der Turbinenkomponente (7) mit der Hubeinrichtung (5), die den Tragrahmen (3) und die Turbinenkomponente (7) hält.

10. Verfahren zum Montieren einer Turbinenkomponente (7) an einer Turbine (30), welches Verfahren die Schritte enthält:
- Bereitstellen eines Montagesystems (9) nach einem der Ansprüche 1 bis 8,
- Anbringen des Schienenaufbaus (1) mit der Laufkatze (10) an der Turbine (30) mittels der Bügel (13, 14, 15, 18),
- Ausrichten des Schienenaufbaus (1) mit der Bewegungsrichtung der Turbinenkomponente (7) zwischen der äußeren und der inneren Position durch Einstellen der Länge der Zugstangen (17) oder Ketten (16),
- Bewegen der Turbinenkomponente (7) mit der Hubeinrichtung (5), die den Tragrahmen (3) und die Turbinenkomponente (7) hält, zu einer definierten Position senkrecht unterhalb des Schienenaufbaus (1),
- Anheben des Tragrahmens (3) mit der Turbinenkomponente (7) bis zu der Laufkatze (10),
- Verbinden des Halters (11, 12) mit der Turbinenkomponente (7) in der äußeren Position mit der Laufkatze (10),
- Absenken des Tragrahmens (3) mit der Hubeinrichtung (5),
- Einschieben der Turbinenkomponente (7) in die Turbine (30) durch Bewegen der Laufkatze (10) entlang dem Schienenaufbau (1),
- Lösen der Turbinenkomponente (7) von dem Halter (11, 12).

11. Verfahren zum Entfernen einer Turbinenkomponente (7) aus einer Turbine (30) nach Anspruch 9 oder Verfahren zum Montieren einer Turbinenkomponente (7) an einer Turbine (30) nach Anspruch 10, **dadurch gekennzeichnet, dass** der Schritt des Montieren des Schienenaufbaus (1) mit der Laufkatze (10) an der Turbine (30) die Schritte des Anbringens eines Werkzeugrahmens (8) an der Hubeinrichtung (5) und des Anbringens des Schienenaufbaus (1) mit der Laufkatze (10) an dem Werkzeugrahmen (8), des Bewegens der Hubeinrichtung zu einer definierten Position in der Nähe oder unterhalb der Turbine (30) und des Anhebens des Schienenaufbaus (1) mit der Laufkatze (10) zum Montieren des Schienenaufbaus (1) an der Turbine umfasst.

## Revendications

1. Système de montage (9) pour monter ou démonter un composant de turbine (7) ayant un axe, sur ou d'une turbine (30), le système de montage (9) comprenant :
une structure de rail suspendue (1) configurée pour déplacer le composant de turbine (7) à l'aide d'un coulisseau (10) dans une direction le long de l'axe du composant de turbine entre une position extérieure et une position intérieure par rapport à la turbine (30) ;
un dispositif de levage (5) configuré pour recevoir le composant de turbine (7) dans la position extérieure à l'aide d'un bâti de support (3) ; et
un rail de guidage (6) pour guider le dispositif de levage (5) le long d'une trajectoire prédéfinie sur le sol ;
la structure de rail suspendue (1) comprend :
une première console (13, 18) fixée sur une paroi de la turbine (30),
une poutre (20) configurée sous la forme d'un rail (2) s'étendant longitudinalement pour supporter la structure de rail (1), la poutre (20) ayant une extrémité raccordée aux premières consoles (13, 18) via un joint pivotant pour une suspension articulée,
une seconde console (14, 15) fixée à une paroi de la turbine (30), et
deux tirants (17) ou deux chaînes (16) raccordés au niveau d'une extrémité, à la seconde console (14, 15) et au niveau de l'autre extrémité, à la poutre (20) dans des positions longitudinalement déplacées l'une de l'autre pour suspendre et maintenir la poutre (20) dans un angle d'inclinaison défini par rapport à la turbine (30) ; dans lequel :
le coulisseau (10) peut se déplacer le long du rail (2) et être raccordé à un support (11, 12) pour fixer le composant de turbine (7) au coulisseau (10) ;
le bâti de support (3) est configuré pour recevoir le composant de turbine (7) avec le support (11, 12) dans la position extérieure et être fixé au dispositif de levage (5) pour être mobile dans une direction verticale (29) ;
l'angle d'inclinaison de la poutre (20) est ajustable en ajustant la longueur des tirants (17) ou des chaînes (16) afin d'aligner la structure de rail (1) avec la direction de déplacement le long de l'axe du composant de turbine (7) ; et dans lequel :
le support (11, 12) comprend une courroie (11) qui présente une complémentarité de forme avec une première section du composant de turbine (7).

2. Système de montage (9) selon la revendication 1,
**caractérisé en ce que** le support comprend une console (12) qui est configurée pour se raccorder à une seconde section du composant de turbine (7).

3. Système de montage (9) selon l'une des revendications 1 à 2, **caractérisé en ce que** :
le coulisseau (10) comprend un chariot (19) et/ou un guide linéaire raccordé au rail (2).

4. Système de montage (9) selon l'une des revendications 1 à 3,
**caractérisé en ce qu'**il comprend un système de vis de calage (21) pour pousser et tirer le coulisseau (10) le long du rail (2).

5. Système de montage (9) selon la revendication 4, **caractérisé en ce que** :
le système de vis de calage (21) est un système à rupture automatique.

6. Système de montage (9) selon la revendication 1, **caractérisé en ce que** :
le coulisseau (10) comprend une première section pour se raccorder, de manière mobile, à la structure de rail (1), une seconde section pour se raccorder au support (11, 12), une interface raccordant la première section à la seconde section, dans lequel l'interface est configurée pour ajuster la position de la seconde section par rapport à la première section pour ajuster la position du composant de turbine (7) suspendu par le système de montage par rapport à la turbine.

7. Système de montage (9) selon l'une des revendications 1 à 6, **caractérisé en ce qu'**il comprend un bâti d'outil (8) pouvant être fixé au dispositif de levage (5) et configuré pour recevoir la structure de rail (1) avec le coulisseau (10) pour monter/démonter la structure de rail (1) avec le coulisseau (10) sur une turbine.

8. Système de montage (9) selon l'une des revendications 1 à 7,
**caractérisé en ce qu'**il comprend au moins l'un parmi une poignée manuelle, un moteur électrique, et un moteur pneumatique pour déplacer le coulisseau (10) par rapport à la structure de rail (1).

9. Procédé pour démonter un composant de turbine (7) d'une turbine (30), le procédé comprenant les étapes consistant à :
prévoir un système de montage (9) selon l'une des revendications 1 à 8,
monter la structure de rail (1) avec le coulisseau (10) sur la turbine (30) via les consoles (13, 14, 15, 18) ;
aligner la structure de rail (1) avec l'axe du composant de turbine en ajustant la longueur des tirants (17) ou des chaînes (16),
fixer le composant de turbine (7) sur le coulisseau (10) à l'aide du support (11, 12),
retirer le composant de turbine (7) de la turbine (30) en déplaçant le coulisseau (10) le long de la structure de rail (1),
déplacer le dispositif de levage (5) avec le bâti de support (3) fixé à ce dernier dans une position définie verticalement au-dessous du composant de turbine (7),
lever le bâti de support (3) pour recevoir le composant de turbine (7) dans la position extérieure,
détacher le composant de turbine (7) du support (11, 12),
et retirer le composant de turbine (7) avec le dispositif de levage (5) qui maintient le bâti de support (3) et le composant de turbine (7).

10. Procédé pour monter un composant de turbine (7) sur une turbine (30), le procédé comprenant les étapes consistant à :
prévoir un système de montage (9) selon l'une des revendications 1 à 8,
monter la structure de rail (1) avec le coulisseau (10) sur la turbine (30) via les consoles (13, 14, 15, 18),
aligner la structure de rail (1) avec la direction de déplacement du composant de turbine (7) entre la position extérieure et la position intérieure en ajustant la longueur des tirants (17) ou des chaînes (16),
déplacer le composant de turbine (7) avec le dispositif de levage (5) qui maintient le bâti de support (3) et le composant de turbine (7) dans une position définie verticalement au-dessous de la structure de rail (1),
lever le bâti de support (3) avec le composant de turbine (7) jusqu'au coulisseau (10),
raccorder le support (11, 12) avec le composant de turbine (7) dans la position extérieure, au coulisseau (10),
abaisser le bâti de support (3) avec le dispositif de levage (5),
pousser le composant de turbine (7) dans la turbine (30) en déplaçant le coulisseau (10) le long de la structure de rail (1),
détacher le composant de turbine (7) du support (11, 12).

11. Procédé pour démonter un composant de turbine (7) d'une turbine (30) selon la revendication 9 ou procédé pour monter un composant de turbine (7) sur une turbine (30) selon la revendication 10, **caractérisé en ce que** l'étape consistant à monter la structure de rail (1) avec le coulisseau (10) sur la turbine (30) comprend les étapes consistant à fixer le bâti d'outil (8) sur le dispositif de levage (5), et fixer la structure de rail (1) avec le coulisseau (10) au bâti d'outil (8), déplacer le dispositif de levage dans une position définie à proximité de ou au-dessous de la turbine (30) et lever la structure de rail (1) avec le coulisseau (10) pour monter la structure de rail (1) sur la turbine.
